# EUROPÄISCHE PATENTSCHRIFT

(11) **EP 0 953 225 B1**
(45) Veröffentlichungstag und Bekanntmachung des Hinweises auf die Patenterteilung: **04.10.2006**
(21) Anmeldenummer: 98906817.6
(22) Anmeldetag: 16.01.1998
(51) Int. Cl.: H03B 5/08, H04B 5/00, H01F 38/14

(54) **ANORDNUNG ZUR BERÜHRUNGSLOSEN ÜBERTRAGUNG ELEKTRISCHER ENERGIE BZW. ELEKTRISCHER SIGNALE**
ARRANGEMENT FOR THE CONTACTLESS TRANSMISSION OF ELECTRIC ENERGY AND/OR ELECTRIC SIGNALS
DISPOSITIF POUR LA TRANSMISSION SANS CONTACT D'ENERGIE ELECTRIQUE ET/OU DE SIGNAUX ELECTRIQUES

(30) Priorität: 16.01.1997 DE 19701357
(43) Veröffentlichungstag der Anmeldung: 03.11.1999
(73) Patentinhaber: Schleifring und Apparatebau GmbH, 82256 Fürstenfeldbruck (DE)
(72) Erfinder: LOHR, Georg, D-82223 Eichenau (DE)
(74) Vertreter: Lohr, Georg
(86) Internationale Anmeldenummer: PCT/DE1998/000141
(87) Internationale Veröffentlichungsnummer: WO 1998/032217

(56) Entgegenhaltungen:
- EP-A- 0 412 421
- EP-A- 0 440 050
- US-A- 4 223 313
- ZIERHOFER C M ET AL: "HIGH-EFFICIENCY COUPLING-INSENSITIVE TRANSCUTANEOUS POWER AND DATA TRANSMISSION VIA AN INDUCTIVE LINK" IEEE TRANSACTIONS ON BIOMEDICAL ENGINEERING, Bd. 37, Nr. 7, 1.Juli 1990, Seiten 716-722, XP000148221
- PATENT ABSTRACTS OF JAPAN vol. 005, no. 173 (P-087), 5.November 1981 & JP 56 100368 A (FURUKAWA ELECTRIC CO LTD:THE), 12.August 1981,

## Beschreibung

### Technisches Gebiet

Die Erfindung bezieht sich auf eine Anordnung zur berührungslosen bzw. kontaktlosen Übertragung elektrischer Energie bzw. elektrischer Signale zwischen relativ zueinander beweglichen Teilen.

Derartige Vorrichtungen werden zur Übertragung von elektrischen Signalen bzw. elektrischer Energie zwischen zwei oder mehr relativ zueinander beweglichen Teilen eingesetzt. Die Bewegung kann dabei eine rotatorische, eine translatorische oder eine zusammengesetzte Bewegung sein.

Der Übersichtlichkeit halber wird in der vorliegenden Beschreibung nicht zwischen der Übertragung zwischen gegeneinander beweglichen Einheiten und einer feststehenden und dazu beweglichen Einheiten unterschieden, da dies nur eine Frage des Ortsbezugs ist, und keinen Einfluß auf die Funktionsweise der erfindungsgemäßen Anordnung hat. Ebenso wird nicht weiter zwischen der Übertragung von Signalen und Energie unterschieden, da die Wirkungsmechanismen gleich sind.

### Stand der Technik

Bei translatorisch und insbesondere linear beweglichen Einheiten wie Kran- und Förderanlagen sowie bei drehbaren Einheiten wie Radaranlagen oder auch Computertomographen ist es notwendig, zwischen gegeneinander beweglichen Einheiten bzw. einer feststehenden und wenigstens einer dazu beweglich angeordneten Einheit elektrische Signale bzw. Energie zu übertragen.

Beispielsweise dann, wenn die Relativgeschwindigkeit der Einheiten vergleichsweise hoch ist, ist es von Vorteil, wenn die Übertragung kontaktlos erfolgt. Eine kontaktlose Übertragung hat darüberhinaus gegenüber einer kontaktierenden Übertragung beispielsweise mittels Schleifkontakten Vorteile, wenn bei der Übertragung digitaler Signale hohe Datenraten übertragen werden sollen bzw. für die Übertragung analoger Signale hohe Bandbreiten erforderlich sind:

Bei herkömmlichen (kreisförmigen) Schleifringen begrenzt der Durchmesser des Schleifrings die maximal übertragbare Frequenz. Diese ist dann erreicht, wenn der Schleifring-Umfang einer halben Wellenlänge der zu übertragenden Signale entspricht.

Anordnungen bzw. Vorrichtungen zur kontaktlosen Übertragung von Signalen bzw. elektrischer Energie sind in den verschiedensten Ausführungen beispielsweise aus der DE 30 43 441 A1 oder der DE 42 36 340 C2 bekannt:

Bei der aus der DE 30 43 441 A1 bekannten Einrichtung zur drahtlosen Energieübertragung werden induktive Koppelelemente verwendet, die durch entsprechende komplementäre Blindelemente bzw. Kondensatoren zu Resonanzkreisen ergänzt sind und von einem schaltenden bzw. verstärkenden Element gespeist werden.

Bei der aus der DE 42 36 340 C2 bekannten Anordnung zur induktiven Übertragung von Energie im Bereich mittlerer Frequenzen von einer auf einem Stator angeordneten Primärspule auf einen mit wenigstens einer Sekundärspule ausgestatteten Verbraucher besteht die Primärspule aus in Gruppen von in Reihe geschalteten Spulen, wobei pro Gruppe ein Kondensator in Reihe geschaltet ist. Alle Gruppen sind jeweils parallel an eine Mittelfrequenzsammelleitung angeschlossen, wobei die Impedanzen jeder Spulengruppe und des jeweiligen Kondensators so bemessen sind, daß bei induktiver Kopplung einer Gruppe an einen der bewegbaren Verbraucher die Resonanzbedingung für diese Gruppe zumindest annähernd erfüllt ist.

Eine weitere Anordnung ist aus DE 33 31 722 A1 bekannt. Diese bekannte Anordnung weist an jedem Teil Koppelelemente auf, von denen jedes wenigstens eine Elektrode enthält, so daß das Signal kapazitiv über die jeweils gegenüberstehenden Elektroden übertragen wird.

Eine weitere Anordnung mit induktiver Übertragung ist in der DE 28 45 438 A1 beschrieben.

Aus dem Dokument IEEE TRANSACTIONS ON BIOMEDICAL ENGI-NEERING,Bd.37,Nr.7 vom 1.Juli 1990, Seiten 716-722 ist eine Anordnung zur berührungslosen Übertragung elektrischer Energie bzw. elektrischer Signale zwischen relativ zueinander beweglichen Teilen bekannt, die induktive oder kapazitive Koppelelemente aufweist, die durch komplementäre Bindeelemente zu Resonanzkreisen ergänzt sind und von einem schaltenden bzw. verstärkendem Element zu einem Leistungsoszillator ergänzt ist.

Die dort gewählte Schaltungsanordnung ist durch eine relativ lose Kopplung gekennzeichnet, benötigt mindestens zwei Resonanzkreise und ist lediglich zur Übertragung kleiner Leistungen geeignet. Dabei ist die gewählte Anordnung des Rückkoppelpfades L_{f} unvorteilhaft. Die Berechnung aller benötigten Werte, insbesondere der Spannung, ist dadurch sehr aufwendig.

In der EP 56 100 368 ist ein digitales System beschrieben, in dem man durch die Auskopplung unterschiedlicher Resonanzen eine analoge Größe zum Abstand erhält.

Es sind weitere Lösungen bekannt, die nachfolgend hinsichtlich der Darstellung der Erfindung kurz erläutert werden. Dabei werden lediglich die Aspekte berücksichtigt, die zum Verständnis der Lösung unbedingt notwendig sind.

Grundsätzlich besitzen Anordnungen, von denen bei der Formulierung des Oberbegriffs des Anspruchs 1 ausgegangen worden ist, Impedanzen mit einem signifikanten Imaginärteil. Dieser kommt bei kapazitiven Koppelanordnungen durch die von der Geometrie begrenzte Koppelkapazität und bei induktiven Einrichtungen durch die Streuinduktivität zustande. Die Streuinduktivität läßt sich nicht beliebig klein gestalten, da zwischen den beweglichen Teilen aus mechanischen Gründen immer ein gewisser Luftspalt verbleibt. Die durch Koppelinduktivität und -kapazität im Leistungskreis vorhandenen Impedanzen begrenzen ohne zusätzliche Maßnahmen die übertragbare Leistung.

Wie bereits in Meinke Gundlach, Taschenbuch der Hochfrequenztechnik, 3. Auflage, Springer Verlag, 1968, beschrieben, läßt sich eine solche imaginäre Impedanz mit einer zweiten imaginären Impedanz gleichen Betrags und entgegengesetzten Vorzeichens kompensieren.

Im Falle der induktiven Übertragung ist dies auch unter dem Begriff Resonanzübertrager bekannt. Hierzu wird auf Meinke/Gundlach, Seite 186 (Resonanzübertrager) verwiesen.

Zur Kompensation fügt man einem induktiven Übertragungselement eine Kapazität bzw. einem kapazitivem Übertragungselement eine zusätzliche Induktivität hinzu und ergänzt das jeweilige Übertragungselement somit zu einem Resonanzkreis. Bei der Resonanzfrequenz wird die Impedanz eines solchen Resonanzkreises im Falle der'Parallelschaltung (Parallelresonanz) gegen unendlich und im Falle einer Serienresonanz (Serienschaltung) gegen Null gehen.

Damit beeinflußt zwar diese Impedanz die Leistungsübertragung nicht mehr, besonders problematisch bei der technischen Realisierung einer solchen Anordnung sind aber die mechanischen Toleranzen. So wird sich durch eine Bewegung der Elemente gegeneinander oder auch durch thermische Ausdehnungen die Induktivität bzw. die Koppelkapazität zumindest geringfügig ändern.

In "Zierhofer, "High-Efficiency Coupling-Insensitive Transcutaneous Power and Data Transmission Via an Inductive Link", IEEE Transactions on Biomedical Engineering 37(1990) July, Nr 7, Seite 716-721 ist eine Vorrichtung zur induktiven Energieübertragung offenbart. Sie weist einen Klasse-E-Verstärker auf, welcher in einen vom Kopplungfaktorweitgehend unabhängigen Frequenzbereich arbeitet. Diese weist die zuvor beschriebenen Nachteile auf. Das Dokument EP-A-0412421 offenbart eine Vorrichtung mit allen Merkmalen des Oberbegriffs das Anspruchs 1.

Wird die Schaltung nun mit einem Oszillator fester Arbeitsfrequenz gespeist, so kann durch derartige mechanische Einflüsse oder auch Alterungs- und Temperaturdrifterscheinungen des Oszillators, eine Abweichung von der Oszillatorarbeitsfrequenz und der Resonanzfrequenz der Übertragungseinrichtung auftreten.

In einem solchen Fall ist die Kompensation der Blindelemente nicht mehr wirksam und die Übertragungseinrichtung besitzt Impedanzen, die eine Energieübertragung wesentlich beeinträchtigen können.

Zur Lösung des Problems sind verschiedene Maßnahmen bekannt, wie der Einsatz eines temperaturstabilisierten Quarzoszillators und eine äußerst eng tolerierte mechanische Ausführung des Übertragungselementes. Eine andere Lösung besteht nach der DE 34 47 560 A1 aus einem Oszillator, welcher durch Kapazitätsdioden nachstimmbar ist. Derartige Lösungen bedingen einen hohen technischen Aufwand und führen zu einem empfindlichen und instabilen System.

### Darstellung der Erfindung

Aufgabe der Erfindung ist es, eine Anordnung zur berührungslosen Übertragung elektrischer Energie bzw. elektrischer Signale Übertragung zwischen relativ zueinander beweglichen Teilen, die induktive oder kapazitive Koppelelemente aufweist, die durch entsprechend komplementäre Blindelemente zu Resonanzkreisen ergänzt sind und von einem schaltenden bzw. verstärkenden Element gespeist werden, derart weiterzubilden, daß eine Energie- bzw. Signalübertragung in einem weiten Bereich unabhängig von Umgebungsbedingungen, Temperatur und mechanischen Toleranzen erfolgen kann.

Eine erfindungsgemäße Lösung dieser Aufgabe ist im Patentanspruchs 1 angegeben. Weiterbildungen der Erfindung sind Gegenstand der Ansprüche 2 folgende.

Die Erfindung geht von folgendem Grundgedanken aus:

Eine zu einem Resonanzkreis ergänzte induktive oder kapazitive übertragungseinrichtung besitzt ihre optimalen Üertragungseigenschaften ausschließlich beider Resonanzfrequenz. Daher wird erfindungsgemäß die Schaltung zu einem Leistungsoszillator ergänzt, in dem der zur Übertragung verwendete Resonanzkreis das frequenzbestimmende Schaltungselement ist. Dabei spielt es keine Rolle, ob es sich bei dem Resonanzkreis des Übertragungselementes um einem Serien- oder Parallelkreis handelt. Es kann auch durch weitere zusätzlich Blindelemente zu einem mehrkreisigen, resonanzfähigen System ausgebildet werden.

Wesentlich ist, daß das Übertragungssystem derart gestaltet ist, daß es durch Mitkopplung zur Oszillation bei mindestens einer Resonanzfrequenz des Systems, bei der eine Energieübertragung möglich ist, angeregt werden kann.

Die Anordnung weist ein verstärkendes Element auf, das die resonante Übertragungseinrichtung speist. Eine Signalisierungseinrichtung ermittelt aus Strömen und Spannungen der Resonanzelemente ein Signal, welches zumindest eine Phaseninformation enthält und signalisiert diese dem verstärkenden Element. Um ein schwingfähiges Gebilde zu erhalten, ist in dieser Anordnung eine schaltende oder verstärkende Komponente notwendig, mit einer derartigen Verstärkung, daß die Schwingbedingung (siehe Tietze, Schenk, Halbleiterschaltungstechnik, Springer Verlag, 10. Auflage, S. 459) erfüllt ist. Ob die schaltende oder verstärkende Komponente hier als reiner Halbleiterschalter oder als lineares Verstärkungselement ausgeführt ist, hat keinen Einfluß auf die Funktion der erfindungsgemäßen Anordnung.

Daher wird im weiteren Text auch nicht zwischen Schalter und Verstärker unterschieden.

Im Falle einer Serienresonanz enthält die Signalisierungseinrichtung einen Stromabgriff, der einen vorgegebenen Anteil des Resonanzstromes auskoppelt. Dieser Stromabgriff kann beispielsweise ein Strommeßwiderstand, ein Stromübertrager oder ein Hall-Element sein. Ebenso kann der Resonanzstrom als Spannungsabfall an einem der Resonanzelemente gemessen werden.

Im Falle der Parallelresonanz enthält die Signalisierungseinrichtung Komponenten zur Auskopplung eines vorgegebenen Anteils der am Parallelresonanzkreis anliegenden Spannungen. Diese Spannungen können auch indirekt über den Strom durch diese Elemente ermittelt werden.

In einer weiteren vorteilhaften Ausgestaltung der Erfindung enthält die Signalisierungseinrichtung im Falle eines mehrkreisigen Resonanzsystems Komponenten zur Ermittlung der Kombination eines vorgegebenen Anteils mindestens einer Parallelresonanzspannung bzw. eines vorgegebenen Anteils mindestens eines Serienresonanzstromes. Dabei kann die Signalisierungseinrichtung derart ausgeführt sein, daß die Auswertung durch einfache, phasenrichtige Addition dieser Größen erfolgt. Dadurch ist es möglich, je nach Belastungsfall die Schaltung auf einer Serien- oder Parallelresonanz arbeiten zu lassen.

Alternativ ist auch eine Umschaltung realisierbar, welche erkennt, ob eine Serien- oder Parallelresonanz vorliegt und entsprechend einen Anteil von Resonanzspannung bzw. Resonanzstrom ermittelt.

In einer weiteren vorteilhaften Ausgestaltung der Erfindung enthält die Signalisierungseinrichtung Filterelemente zur Vorselektion zwischen den Abgriffen von Resonanzspannung bzw. -strom.

Die Signalisierungseinrichtung enthält einen Hilfsoszillator, welcher ein Anschwingen der Anordnung beim Einschalten der Versorgungsspannung erleichtert. Beim Einschalten der Versorgungsspannung beginnt ein Oszillator üblicherweise aus dem Rauschen heraus mit der Oszillation. Um ein sicheres und schnelles Anschwingen zu gewährleisten, kann ein solcher Oszillator auch ein Startsignal mit einer vorgegebenen Frequenz erhalten. Wird diese Frequenz in der Nähe der gewünschten Arbeitsfrequenz gewählt, erfolgt das Anschwingen besonders schnell. Durch die Vorgabe des Startsignals kann auch bei mehreren möglichen Resonanzen die Oszillation auf der gewünschten

Resonanzfrequenz erfolgen. Würde in einem solchen Fall der Oszillatorstart aus dem Rauschen heraus erfolgen, so kann der Leistungsoszillator auch auf nicht erwünschten Resonanzfrequenzen anschwingen.

In einer weiteren vorteilhaften Ausgestaltung der Erfindung ist eine weitere Auswerteeinheit vorhanden, welche die Arbeitsfrequenz der Schaltung selbst zur Ermittlung des Abstandes zwischen den gegeneinander beweglichen Teilen verwendet. Da sich die Arbeitsfrequenz im Falle einer induktiven Übertragung bzw. einer kapazitiven Übertragung abhängig vom Abstand der gegeneinander beweglichen Elemente verändert, kann aus einer Änderung der Arbeitsfrequenz problemlos die entsprechende Änderung des Abstandes ermittelt werden.

### Kurze Beschreibung der Zeichnung

Die Erfindung wird nachstehend anhand der Zeichnung näher erläutert, in der zeigen:
- Fig. 1: eine erfindungsgemäße Anordnung,
- Fig. 2: ein Ausführungsbeispiel mit einem kapazitiven Koppelelement ergänzt zu einem Serienresonanzkreis, und
- Fig. 3: ein Ausführungsbeispiel mit einem induktiven Koppelelement ergänzt zu einem Parallelresonanzkreis.

### Darstellung von Ausführungsbeispielen

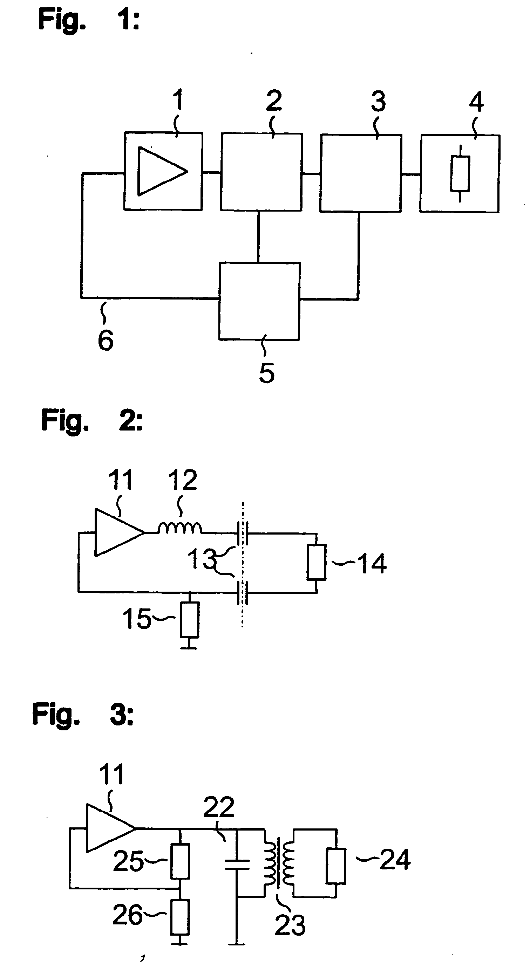

Fig. 1 zeigt eine erfindungsgemäße Anordnung mit Resonanzkopplung, bestehend aus einem induktiven bzw. kapazitiven Koppelelement 3, welches eine Last 4 speist. Dieses Koppelelement wird durch zumindest ein Blindelement 2 zu einem resonanzfähigen Gebilde ergänzt. Die Signalisierungseinrichtung 5 bildet aus Resonanzströmen bzw. -spannungen am Koppelelement bzw. an den ergänzenden Blindelementen ein Mitkopplungssignal mit einer Amplitude und Phase derart, daß das schaltende bzw. verstärkende Element 1, zusammen mit den ihm nachgeschalteten Blindelementen 2 und 3, die Schwingbedingung erfüllt.

Fig. 2 zeigt eine beispielhafte Anordnung entsprechend der Erfindung im Falle einer kapazitiven Übertragungseinrichtung. Das kapazitive Koppelelement 13 speist die Last 14. Es wird zu einem resonanzfähigen Gebilde ergänzt durch die Induktivität 12. Die Signalisierungseinrichtung besteht hier aus einem Strommeßwiderstand 15, welcher an die schaltende oder verstärkende Komponente 11 ein Signal proportional zum Serienresonanzstrom durch Induktivität und Kapazität übermittelt.

Fig. 3 zeigt beispielhaft eine besonders einfache Ausführungsform einer erfindungsgemäßen Anordnung im Falle einer Parallelresonanz an einem induktiven Koppelelement. Das induktive Koppelelement 23 speist hier eine Last 24. Die Induktivität wird durch die Kapazität 22 zu einem Parallelresonanzkreis ergänzt. Diese Signalisierungseinrichtung besteht hier aus einem Spannungsteiler mit den beiden Widerständen 25 und 26, welche einen vorgegebenen Anteil der Parallelresonanzspannung an Induktivität und Kapazität abgreift und diese an die schaltende bzw. verstärkende Komponente weiterleitet.

## Patentansprüche

1. Anordnung zur berührungslosen Übertragung elektrischer Energie bzw. elektrischer Signale zwischen relativ zueinander beweglichen Teilen, die induktive oder kapazitive Koppelelemente aufweist, die durch entsprechend komplementäre Blindelemente zu Resonanzkreisen ergänzt sind und von einem schaltenden bzw. verstärkenden Element gespeist werden und daß das schaltende bzw. verstärkende Element zu einem Leistungsoszillator ergänzt ist, in dem der zur Übertragung verwendete Resonanzkreis das frequenzbestimmende Schaltungselement ist und daß eine Signalisieruhgseinrichtung vorgesehen ist, die aus Spannungen und Strömen der resonanten Elemente ein Mitkoppelsignal für das schaltende bzw. verstärkende Element derart erzeugt, daß eine Oszillation auf zumindest einer Resonanzfrequenz der Resonanzkreise erfolgt, **dadurch gekennzeichnet, daß** ein zusätzlicher Hilfsoszillator mit einer Frequenz in der Nähe der gewinschten Arbeitsfrequenz vorgesehen ist, der das Anschwingen der Schaltung erleichtert und die Signalisierungseinrichtung derart gestaltet ist, daß sie im Falle einer Serienresonanz eine Größe proportional zu einem Teil eines Serienresonanzstromes auskoppelt und im Falle einer Parallelresonanz eine Größe proportional zu einem Teil einer Parallelresonanzspannung auskoppelt.

2. Anordnung nach Anspruch 1, **dadurch gekennzeichnet, daß** im Falle mehrerer Resonanzen die Signalisierungseinrichtung derart gestaltet ist, daß sie ein kombiniertes Signal, bestehend aus einer Größe proportional zu einem Serienresonanzstrom und proportional zu einer Parallelresonanzspannung auskoppelt.

3. Anordnung nach einem der Ansprüche 1 und 2 **dadurch gekennzeichnet, daß** eine Auswerteeinrichtung vorhanden ist, welche die Arbeitsfrequenz der Anordnung ermittelt und daraus ein Signal, entsprechend der Größe des Abstandes der gegeneinander beweglichen Einheiten ableitet.

4. Anordnung nach einem der Ansprüche 1 bis 3 **dadurch gekennzeichnet, daß** die Signalisierungseinrichtung Filterelemente zur Vorselektion zwischen den Abgriffen von Resonanzspannung bzw. -strom aufweist.

## Claims

1. Arrangement for non-contacting transmission of electrical energy or electrical signals between parts that are mobile relative to each other and comprise inductive or capacitive coupler elements which are supplemented by suitably complementary reactive elements to form resonance circuits and are powered by a switching or amplifying element, the switching or amplifying element being supplemented to form a power oscillator in which the resonance circuit used for transmission is the frequency-determining circuit element, a signalling means being provided for generating a positive feedback signal for the switching or amplifying element from voltages and currents of the resonant elements, so that an oscillation takes place on at least one resonance frequency of the resonance circuits,
**characterized in that** an auxiliary oscillator having a frequency close to the desired operating frequency is provided for facilitating a stimulation of oscillation of the circuit, and the signalling means is adapted to couple out a parameter proportional to a part of a series resonance current in the case of a series resonance, and to couple out a parameter proportional to a part of a parallel resonance voltage in the case of a parallel resonance.

2. Arrangement according to claim 1,
**characterized in that** the signalling means is adapted to couple out a combined signal comprising a parameter proportional to a series resonance current and proportional to a parallel resonance voltage in the case of a plurality of resonances.

3. Arrangement according to any one of claims 1 and 2,
**characterized in that** an evaluating means is provided for determining the operating frequency of the system and deriving therefrom a signal corresponding to the distance between the units movable relative to each other.

4. Arrangement according to any one of claims 1 to 3,
**characterized in that** the signalling means comprises filter elements for performing a pre-selection between taps of resonance voltage and current.

## Revendications

1. Dispositif à transmettre sans contact d'énergie électrique et/ou de signaux électriques entre des unités mobiles l'une relativement à l'autre, qui comprend des éléments coupleurs inductifs ou capacitifs, qui sont complétés par des éléments réactif correspondamment complémentaires à former des circuits résonateurs et qui sont alimentés par un élément commutateur ou respectivement amplifiant, cet élément commutateur ou respectivement amplifiant étant complété à former un oscillateur de puissance, dans lequel
ledit circuit résonateur utilisé à la transmission est l'élément de circuit, qui détermine la fréquence, et dans lequel un moyen de signalisation est disposé, qui engendre un signal de contre-réaction pour ledit élément commutateur ou respectivement amplifiant, à partir des tensions et courants des éléments résonnants, d'une telle manière, qu'il y ait une oscillation à au moins une fréquence de résonance dudit circuit résonateur,
**caractérisé en ce qu'**un oscillateur auxiliaire supplémentaire à une fréquence proche à la fréquence de travail souhaitée est disposé, qui facilite le début de la résonance du circuit, et **en ce que** ledit moyen de signalisation est si configuré, qu'il découple une quantité proportionnelle à une partie d'un courant de résonance en série au cas d'une résonance en série, et, au cas d'une résonance parallèle, une quantité proportionnelle à une partie d'une tension de résonance parallèle.

2. Dispositif selon la revendication 1,
**caractérisé en ce qu'**au cas de plusieurs résonances, le moyen de signalisation est configurée d'une telle manière, qu'il découple un signal combiné composé d'une quantité proportionnelle à un courant de résonance en série et proportionnelle à une tension de résonance parallèle.

3. Dispositif selon une quelconque des revendications 1 et 2,
**caractérisé en ce qu'**un moyen évaluateur est compris, qui établit la fréquence de travail du dispositif et en dérive un signal en correspondance avec l'étendue de l'écart entre lesdites unités mobiles l'une relativement à l'autre.

4. Dispositif selon une quelconque des revendications 1 à 3,
**caractérisé en ce que** ledit moyen de signalisation comprend des éléments filtres pour la présélection entre les prises de la tension de résonance ou respectivement du courant de résonance.
